# EUROPÄISCHE PATENTSCHRIFT

(11) **EP 2 677 635 B1**
(45) Veröffentlichungstag und Bekanntmachung des Hinweises auf die Patenterteilung: **27.09.2017**
(21) Anmeldenummer: 12172968.5
(22) Anmeldetag: 21.06.2012
(51) Int. Cl.: F04D 13/06, F04D 29/18, F04D 29/20, H02K 3/30, H02K 3/32, H02K 3/34, H02K 3/38, H02K 3/52

(54) **Statoranordnung**
Stator assembly
Agencement de stator

(43) Veröffentlichungstag der Anmeldung: 25.12.2013
(73) Patentinhaber: Grundfos Holding A/S, 8850 Bjerringbro (DK)
(72) Erfinder: Stampe, Lars Toft, Almind 8800 Viborg (DK)
(74) Vertreter: Patentanwälte Vollmann & Hemmer

(56) Entgegenhaltungen:
- WO-A1-2011/108735
- WO-A2-2005/020408
- US-A1- 2007 182 265
- US-A1- 2007 232 094

## Beschreibung

Die Erfindung betrifft eine Statoranordnung für einen elektrischen Motor sowie einen elektrischen Motor mit einer solchen Statoranordnung und ein Pumpenaggregat mit einem solchen elektrischen Motor.

Beispielsweise in Pumpenaggregaten, welche einen elektrischen Antriebsmotor aufweisen, ist in diesem Motor eine Statoranordnung vorgesehen, bei welcher mehrere Statorwicklungen auf einem gemeinsamen Wicklungsträger angeordnet sind. Die Statorwicklungen sind dabei in der Regel paarweise elektrisch miteinander verbunden. Dazu sind am Wicklungsträger Verbindungsdrähte anzuordnen. In der Regel sind diametral gegenüberliegende Spulen in Reihe geschaltet, sodass die Verbindungsdrähte über den halben Umfang zu führen sind. Solche Statoranordnungen sind dabei ferner häufig in metallischen Statorgehäusen angeordnet. Daher ist es wichtig, die Verbindungsdrähte der Spulen, welche außen am Wicklungsträger liegen, ausreichend gegenüber dem Statorgehäuse elektrisch zu isolieren oder ausreichende Abstände von der Innenwandung des metallischen Statorgehäuses einzuhalten. Dies ist insbesondere bei kompakt aufgebauten Pumpenaggregaten schwierig.

US 2007/0232094 A1 offenbart eine Struktur für einen Motor oder einen Generator mit einem Stator, welcher eine Vielzahl von Statorwicklungen aufweist. Diese Wicklungen sind auf einem isolierenden Wicklungsträger angeordnet, welcher das Statorblechpaket umgibt. An einer Axialseite des Stators ist der Wicklungsträger mit ringförmigen Nuten versehen, in welche massive bogenförmige elektrische Leiter eingesetzt sind. Diese sind mit den Wicklungsdrähten der Spulen zu deren Kontaktierung verbunden.

Im Hinblick auf diesen Stand der Technik ist es Aufgabe der Erfindung, eine verbesserte Statoranordnung bereitzustellen, welche bei kompakten Aufbau eine einfache Isolierung von Verbindungsdrähten zwischen einzelnen Wicklungen gegenüber umgebenden Metallteilen ermöglicht, und darüber hinaus einfach zu montieren ist.

Diese Aufgabe wird gelöst durch eine Statoranordnung mit den in Anspruch 1 angegebenen Merkmalen, durch einen elektrischen Motor mit den in Anspruch 15 angegebenen Merkmalen sowie durch ein Pumpenaggregat mit den in Anspruch 17 angegebenen Merkmalen. Bevorzugte Ausführungsformen ergeben sich aus den zugehörigen Unteransprüchen, der nachfolgenden Beschreibung sowie den beigefügten Figuren.

Die erfindungsgemäße Statoranordnung ist zur Verwendung in einem elektrischen Motor vorgesehen und weist mehrere elektrische Wicklungen auf, welche in bekannter Weise, beispielsweise aus einem lackierten Kupferdraht gewickelt sein können. Die Wicklungen sind an einem Wicklungsträger aus Kunststoff, insbesondere an einem gemeinsamen Wicklungsträger aus Kunststoff angeordnet. Dieser Wicklungsträger ist bevorzugt einteilig bzw. einstückig ausgebildet, kann jedoch auch aus mehreren Einzelteilen zusammengesetzt sein. Der Wicklungsträger dient zur Fixierung der Wicklungen und bevorzugt auch zur elektrischen Isolation der Wicklungen gegenüber den metallischen Bauteilen des Stators, insbesondere der im Stator angeordneten Eisenblechen.

Erfindungsgemäß ist an zumindest einer axialen Stirnseite des Wicklungsträgers an dem Wicklungsträger zumindest eine Nut ausgebildet. Diese Nut erstreckt sich in Umfangsrichtung und ist zur axialen Stirnseite hin geöffnet. In der Nut ist zumindest ein elektrischer Leiter angeordnet, welcher zwei der Wicklungen, insbesondere zwei diametral gegenüberliegende Wicklungen miteinander verbindet. Durch die Anordnung dieses elektrischen Leiters in der Nut kann insbesondere zur Radialseite hin eine ausreichende elektrische Isolation gegenüber einem umgebenden Statorgehäuse oder umgebenden Metallteilen sichergestellt werden, da der Leiter am Außenumfang durch eine Seitenwandung der Nut überdeckt und so auf Abstand zu einem umgebenden Bauteil gehalten werden kann. D. h. die Seitenwandung der Nut liegt, wenn die die Statoranordnung in ein Statorgehäuse eingesetzt ist, in radialer Richtung gesehen zwischen dem elektrischen Leiter und der Innenwand des Statorgehäuses oder einem umgebenden Metallteil. Da der Wicklungsträger aus Kunststoff ausgebildet ist, kann eine solche Seitenwand der Nut eine ausreichende elektrische Isolation bieten, auch wenn sie gleichzeitig in radialer Richtung sehr dünn ausgebildet werden kann, sodass insgesamt ein sehr geringer Abstand des elektrischen Leiters von einer Innenwandung des Statorgehäuses bei trotzdem guter elektrischer Isolation möglich ist. Dadurch wird ein kompakter Aufbau des Motors sichergestellt. Gleichzeitig kann auf eine zusätzliche Isolation des elektrischen Leiters verzichtet werden und es wird einfach der lackierte Wicklungsdraht, aus welchem die Wicklungen gebildet sind, durch die Nut zur Verbindung der beiden Wicklungen geführt.

Bevorzugt hat die zumindest eine Nut in axialer Richtung eine derartige Tiefe, dass der elektrische Leiter am Außenumfang der Statoranordnung vollständig von einer Seitenwandung der Nut überdeckt ist. So wird sichergestellt, dass die Seitenwandung der Nut, welche wie der übrige Wicklungsträger aus Kunststoff ausgebildet ist, den elektrischen Leiter von einem umgebenden Statorgehäuse sicher trennt und elektrisch isoliert.

Weiter bevorzugt sind mehrere Paare von Wicklungen vorgesehen, deren zwei Wicklungen jeweils über einen elektrischen Leiter miteinander verbunden sind, welcher in der zumindest einen Nut angeordnet ist. Dabei können mehrere Nuten vorgesehen sein, sodass jeder elektrische Leiter in einer eigenen Nut geführt ist. Es ist jedoch auch möglich, dass die Nut zumindest einen Abschnitt aufweist, in welchem mehrere elektrische Leiter angeordnet sind. In diesem Fall weisen die elektrischen Leiter vorzugsweise eine Isolierung, wie eine übliche Lackierung auf. Die Paare von Wicklungen sind in bekannter Weise bevorzugt so angeordnet, dass ihre zwei Wicklungen jeweils diametral gegenüberliegend am Stator angeordnet sind. D. h. der Leiter, welcher die Wicklungen verbindet, muss sich im Wesentlichen über 180° des Umfangs der Statoranordnung bzw. des Wicklungsträgers erstrecken. Wenn mehrere elektrische Leiter gemeinsam in der Nut bzw. einem Abschnitt der Nut angeordnet sind, sind die mehreren elektrischen Leiter bevorzugt axial übereinanderliegend in diesem zumindest einen Abschnitt der Nut angeordnet. So kann die radiale Breite der Nut gering gehalten werden.

Gemäß einer weiteren bevorzugten Ausführungsform können in der Nut Vorsprünge zum Halten oder Führen des zumindest einen elektrischen Leiters ausgebildet sein. Durch diese Vorsprünge kann sichergestellt werden, dass der Leiter nicht unbeabsichtigt aus der Nut herausrutscht. Wenn mehrere Leiter in einem gemeinsamen Abschnitt der Nut angeordnet sind, können die Vorsprünge ferner dazu dienen, die einzelnen Leiter relativ zueinander in gewünschter Weise zu positionieren.

Die Nut weist darüber hinaus vorzugsweise Abschnitte von unterschiedlicher Tiefe in axialer Richtung auf. So können beispielsweise die Abschnitte der Nut, in welchen mehrere Leiter geführt sind, in axialer Richtung gesehen, tiefer ausgebildet werden, als Abschnitte, in denen beispielsweise nur ein Leiter geführt ist. So wird eine optimale Führung auch mehrerer Leiter erreicht, ohne, dass diese in axialer Richtung über die Oberkante der Nut vorstehen oder unbeabsichtigt aus dieser herausrutschen können.

Zweckmäßigerweise weist die zumindest eine Nut an ihrer radial innenliegenden Wandung Öffnungen, insbesondere Schlitze auf, durch welche sich der zumindest eine elektrische Leiter von den Wicklungen in die Nut hinein erstreckt. D. h. bevorzugt liegt an der Umfangsposition jeder Wicklung in der Nut eine Öffnung bzw. ein Schlitz, sodass der elektrische Leiter von dieser Wicklung durch den Schlitz in die Nut hineingeführt werden kann. Die Schlitze liegen bevorzugt an der radial innenliegenden Wandung der Nut, sodass die Wicklungsdrähte bzw. elektrischen Leiter von der radialen Innenseite in die Nut geführt werden und die radiale Außenseite der Nut geschlossen ausgebildet sein kann, sodass dort die radial äußere Seitenwandung der Nut den elektrischen Leiter abschirmt bzw. abdeckt und der elektrische Leiter in diesem Bereich nicht mit umgebenden Bauteilen in Kontakt kommen kann.

In dem Fall, dass die Nuten Abschnitte von unterschiedlicher Tiefe in axialer Richtung aufweisen, sind die Stufen bzw. Übergänge zwischen den Abschnitten unterschiedlicher Tiefe bevorzugt an den Winkelpositionen der Öffnungen gelegen. Die Stufen müssen dabei nicht rechtwinklig ausgebildet sein, sondern können auch als schräge, geneigte oder gerundete Übergänge ausgebildet sein. Die Anordnung der Stufen an den Positionen der Öffnungen hat den Vorteil, dass sich genau dort die Tiefe der Nuten ändert, wo die elektrischen Leiter in die Nut geführt werden. So kann beispielsweise die Nut genau dort eine größere Tiefe erlangen, wo ein zusätzlicher Leiter in den Abschnitt der Nut geführt wird. So wird eine optimale Führung der elektrischen Leiter in der Nut erreicht.

Gemäß einer weiteren bevorzugten Ausführungsform weist die Nut eine radial innenliegende Wandung auf, welche in axialer Richtung eine größere Höhe hat als eine radial außenliegende Wandung der Nut. D. h. die radial innenliegende Wandung der Nut steht in axialer Richtung über die radial außenliegende Wandung bzw. Seitenwandung der Nut in axialer Richtung vor. Dies hat den Vorteil, dass beim Einbringen der elektrischen Leiter in die Nut, diese entlang der Innenwandung geführt werden können, d. h. um die Innenwandung gelegt bzw. gewickelt werden können. Dies begünstigt eine automatisierte Montage der Leiter in der Nut, da der Draht bzw. Leiter sehr einfach mit Hilfe eines Greifers oder einer Nadel um die Innenwandung in der Nut geführt werden kann.

Die Nut muss sich nicht über den gesamten Umfang der Statoranordnung bzw. des Wicklungsträgers erstrecken. Vielmehr kann gemäß einer bevorzugen Ausführungsform die Nut sich nur über einen begrenzten Umfangsabschnitt von weniger als 360°, vorzugsweise weniger oder gleich 320° erstrecken. Wenn beispielsweise sechs Wicklungen vorgesehen sind, sind diese üblicherweise jeweils um 60° in Umfangsrichtung voneinander beabstandet. Wenn von diesen sechs Wicklungen jeweils zwei Wicklungen durch einen elektrischen Leiter zu einem Wicklungspaar miteinander verbunden sind, sind somit drei Leiter zur Verbindung der Wicklungen erforderlich. Diese sind bevorzugt in einer Nut angeordnet und erstrecken sich alle an derselben Umfangsseite bzw. sind in derselben Umfangsrichtung um den Wicklungsträger geführt. Somit verläuft zwischen den letzten zwei benachbarten Wicklungen kein Leiter am Wicklungsträger, sodass an dieser Stelle über einen Winkel von etwa 45° bis 60° auch keine Nut erforderlich ist.

Wie oben bereits ausgeführt, ist erfindungsgemäß der zumindest eine elektrische Leiter von einem lackierten Wicklungsdraht gebildet. Durch die Anordnung in der Nut ist keine weitere Isolation erforderlich. Insbesondere gegenüber einem umgebenden Metallteil wird eine ausreichende zusätzliche Isolierung allein durch die äußere Seitenwandung der Nut, welche wie der Wicklungsträger aus Kunststoff ausgebildet ist, sichergestellt.

Die zumindest eine Nut ist an einer ersten axialen Stirnseite des Wicklungsträgers gelegen und an einer entgegengesetzten zweiten axialen Stirnseite ist an dem Wicklungsträger ein elektrischer Anschluss, insbesondere ein elektrischer Anschlussstecker zum elektrischen Anschluss der Statoranordnung gelegen. D. h. von den Wicklungen wird jeweils ein Ende an der ersten Stirnseite des Wicklungsträgers in die Nut geführt, um jeweils zwei Wicklungen paarweise in Reihe miteinander zu verbinden. Das zweite Ende der Wicklungen wird an der zweiten axialen Stirnseite zu einem elektrischen Anschluss, insbesondere dem elektrischen Anschlussstecker geführt, um die Statoranordnung beispielsweise mit einem Elektronikgehäuse bzw. Klemmenkasten elektrisch zu verbinden.

Der Wicklungsträger umschließt vorzugsweise eine Anordnung von Statorblechen, insbesondere Eisenblechen. Dabei bildet der Wicklungsträger aus Kunststoff vorzugsweise eine elektrische Isolation zwischen Wicklungsdraht und Statorblechen. Die Anordnung von Statorblechen ist weiter bevorzugt in den Wicklungsträger eingegossen.

Gegenstand der Erfindung ist ferner ein elektrischer Motor, welcher eine Statoranordnung gemäß der vorangehenden Beschreibung aufweist. Der Motor kann alle vorangehend im Zusammenhang mit der Statoranordnung beschriebenen Merkmale umfassen. Bevorzugt weist der elektrische Motor ein metallisches Statorgehäuse auf, in welchem die vorangehend beschriebene Statoranordnung angeordnet ist. Wie beschrieben, stellt die Nut dabei sicher, dass die Verbindungsdrähte bzw. elektrischen Leiter, welche die Wicklungen miteinander verbinden, durch die Seitenwandung der Nut auf Abstand zu der Innenwandung des metallischen Statorgehäuses gehalten werden bzw. gegenüber der Innenwandung des Statorgehäuses zusätzlich elektrisch isoliert werden.

Ferner ist auch ein Pumpenaggregat, insbesondere ein Umwälzpumpenaggregat Gegenstand der Erfindung. Ein solches Pumpenaggregat weist einen elektrischen Motor, wie er vorangehend beschrieben wurde, und somit eine Statoranordnung gemäß der vorangehenden Beschreibung auf. Auch das Pumpenaggregat kann somit alle vorangehend im Zusammenhang mit dem elektrischen Motor und der Statoranordnung beschrieben Merkmale umfassen. Besonders bevorzug ist der elektrische Motor ein nasslaufender elektrischer Motor, welcher ein Spaltrohr oder einen Spaltrohrtopf zwischen Stator und einem im Stator angeordneten beweglichen Rotor aufweist. Ein solches Umwälzpumpenaggregat kann beispielsweise ein Heizungsumwälzpumpenaggregat oder auch ein Tauchpumpenaggregat sein.

Weiter bevorzugt ist der elektrische Motor als nasslaufender Motor ausgebildet und der Wicklungsträger ist an seinem ersten Axialende im Bereich der vorangehend beschrieben Nut von einem Kragen eines metallischen Spaltrohres umgeben. Dieser Kragen des metallischen Spaltrohres kann dichtend zur Anlage mit einem umgebenden Pumpengehäuse und/oder Statorgehäuse kommen. Bei dieser Ausführungsform hat die Nut den weiteren Vorteil, dass die äußere Seitenwandung bzw. Umfangswandung der Nut eine Isolation gegenüber dem umgebenden metallischen Kragen des Spaltrohres bildet. Der metallische Kragen des Spaltrohres kann somit sehr nah zu dem Bereich angeordnet werden, in welchem die elektrischen Leiter geführt sind. Eine elektrische Isolation ist auf jeden Fall durch die Seitenwandung der Nut sichergestellt.

Nachfolgend wird die Erfindung beispielhaft anhand der beigefügten Figuren beschrieben. In diesen zeigt:
- Fig. 1: eine Schnittansicht eines Pumpenaggregates mit der erfindungsgemäßen Statoranordnung,
- Fig. 2: eine perspektivische Ansicht einer erfindungsgemäßen Statoranordnung, wie sie in dem Pumpenaggregat gemäß Fig. 1 verwendet wird,
- Fig. 3: eine Schnittansicht der Statoranordnung gemäß Fig. 2,
- Fig. 4: eine Schnittansicht der Statoranordnung einer um 90° gedrehten Ansicht, und
- Fig. 5: eine weitere perspektivische Ansicht der erfindungsgemäßen Statoranordnung.

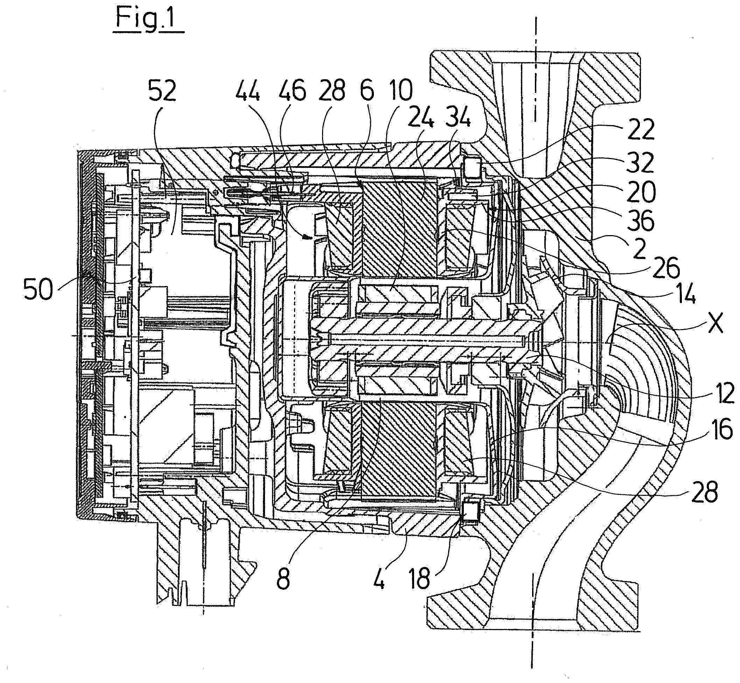

Fig. 1 zeigt ein Pumpenaggregat bestehend aus einem Pumpengehäuse 2 und einem axial d. h. in Richtung der Drehachse X angesetzten Statorgehäuse 4. Im Inneren des Statorgehäuses 4 ist der elektrische Antriebsmotor des Pumpenaggregates angeordnet. Dieser weist eine Statoranordnung 6 auf, welche einen Spaltrohrtopf 8 umgibt. D. h. der Elektromotor ist als nasslaufender Elektromotor ausgebildet. Im Inneren des Spaltrohrtopfes 8 ist ein Rotor 10 angeordnet, welcher über die Rotorwelle 12 mit einem Laufrad 14 im Inneren des Pumpengehäuses 2 verbunden ist. Das Spaltrohr bzw. der Spaltrohrtopf 8 weist an seinem dem Pumpengehäuse 2 zugewandten offenen Ende einen radial nach außen gerichteten Kragen 16 auf, welcher an seinem radial äußeren Ende axial abgewinkelt ist. Diese axiale Abwinklung 18 erstreckt sich von dem Kragen 16 zu der dem Pumpengehäuse 2 abgewandten Seite in axialer Richtung. Die axiale Abwinklung 18 umgibt dabei die Statoranordnung an ihrer ersten axialen Stirnseite 20, welche dem Pumpengehäuse 2 zugewandt ist. Der Spaltrohrtopf 8 liegt über dem Kragen 16 und die axiale Abwinklung 18 dicht an einer Dichtung 22 an, welche zwischen dem Pumpengehäuse 2 und dem Statorgehäuse 4 angeordnet ist. Durch die Dichtung 22 wird der Innenraum des Spaltrohrtopfes 8 an der Schnittstelle zum Pumpengehäuse 2 nach außen abgedichtet.

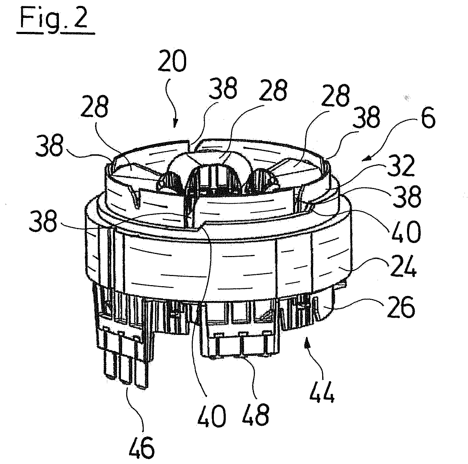

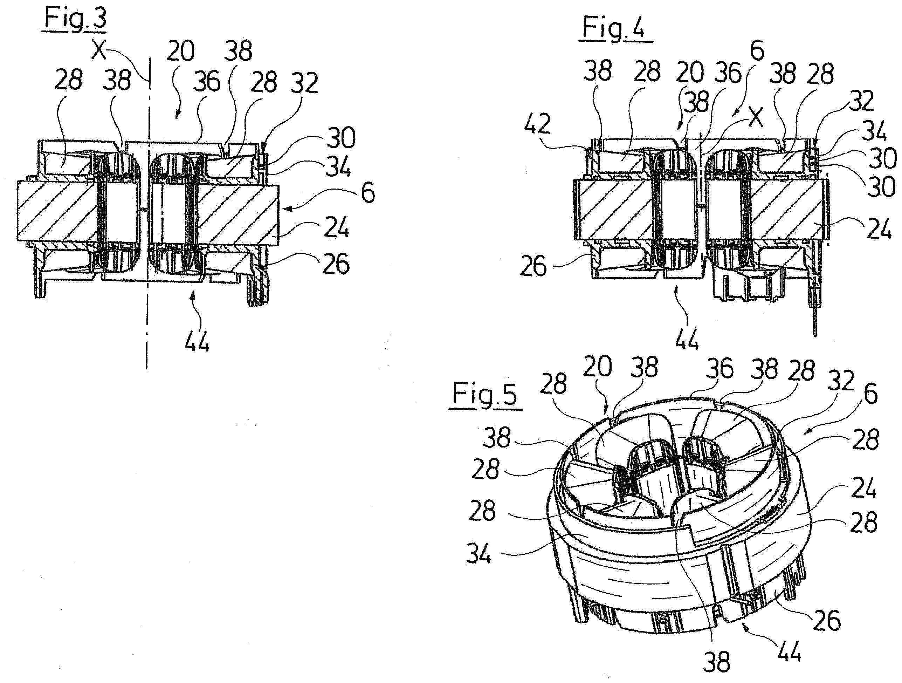

Die Statoranordnung 6 weist eine Anordnung von Statorblechen 24 auf, welche in einen Wicklungsträger 26 aus Kunststoff eingegossen sind. Auf dem Wicklungsträger 26 sind sechs Wicklungen 28 angeordnet. Von den Wicklungen 28 sind jeweils zwei diametral gegenüberliegende Wicklungen als Wicklungspaar elektrisch in Reihe geschaltet miteinander verbunden. Dazu ist der Wicklungsdraht zwischen den beiden Wicklungen 28 eines Wicklungspaares an der ersten Stirnseite 20 des Wicklungsträgers 26 von einer Umfangsseite zu der diametral gegenüberliegenden Umfangsseite geführt. Zur Führung der Wicklungsdrähte 30 ist an der ersten axialen Stirnseite 20 des Wicklungsträgers 26 eine sich in Umfangsrichtung erstreckende Nut 32 ausgebildet. Die Nut 32 erstreckt sich nicht über den gesamten Umfang sondern um etwa 300° um den Umfang, wie in Fig. 5 zu sehen ist. Die Nut 32 wird von einer radial äußeren Seitenwand 34 begrenzt, welche in der Darstellung in Fig. 2 nicht gezeigt ist, um das Innere der Nut 32 erkennbar zu machen. Die radial äußere Seitenwandung 34 der Nut 32 hat in Richtung der Längsachse X eine solche axiale Länge bzw. Höhe, dass sie außenumfänglich die elektrischen Leiter bzw. Wicklungsdrähte 30 im Inneren der Nut 32 vollständig überdeckt. So bildet die äußere Seitenwandung 34 der Nut 32 eine elektrische Isolierung insbesondere gegenüber der axialen Abwinklung 18 des Kragens 16 des Spaltrohrtopfes 8, dem umgebenden Pumpengehäuse 2 sowie dem umgebenden Statorgehäuse 4. Durch die Anordnung der Wicklungsdrähte 30 in der Nut 32 kann auf eine aufwändige zusätzliche Isolierung verzichtet werden. Stattdessen können die Wicklungsdrähte mit Lackummantelungen, welche für die Wicklungen 28 verwendet werden, direkt in der Nut 32 geführt werden. Ferner werden die axiale Abwinklung 18 des Spaltrohrtopfes 8 oder auch das Statorgehäuse 4 in radialer Richtung sehr nah an die Statoranordnung 6 gebracht, wobei durch die Seitenwandung 34 eine sichere Isolierung der Leiter bzw. der Wicklungsdrähte 30, welche die einzelnen Wicklungen 28 miteinander verbinden, gegeben ist.

Am Innenumfang ist die Nut 32 durch eine innere Seitenwandung 36 begrenzt. Die innere Seitenwandung 36 hat eine größere axiale Länge in Richtung der Längsachse X als die äußere Seitenwandung 34. Dies hat den Vorteil, dass die Wicklungsdrähte 30 beim Einbringen in die Nut 32 sehr einfach um die innere Seitenwandung 36 gewickelt werden können und an dieser geführt werden.

In der inneren Seitenwandung 36 sind Öffnungen in Form von Schlitzen 38 ausgebildet, durch welche die Wicklungsdrähte 30 von den Wicklungen 28 in das Innere der Nut 32 geführt werden. Dazu sind die Schlitze 38 jeweils an den Winkelpositionen der Wicklungen 38 angeordnet.

Die Nut 32 weist Abschnitte unterschiedlicher axialer Tiefen auf, je nachdem, ob die jeweiligen Abschnitte ein, zwei oder drei Wicklungsdrähte 30 aufnehmen müssen. Dazu ist der Boden der Nut 32, wie in Fig. 2 gezeigt, gestuft ausgebildet. Die Bereiche, in denen drei Wicklungsdrähte geführt werden, weisen die größte axiale Tiefe auf. Der Bereich, in welchem nur ein Wicklungsdraht geführt wird, weist die geringste Tiefe auf. Die Stufen 40, an denen sich die Tiefe der Nut 32 ändert, sind an den Winkelpositionen der Schlitze 38 gelegen. Somit ändert sich die Tiefe der Nut 32 dort, wo durch einen Schlitz 38 ein zusätzlicher Wicklungsdraht 30 in die Nut 32 geführt wird. D. h. dort wird die Nut 32 in axialer Richtung tiefer. So können die Wicklungsdrähte 30 axial übereinanderliegend in der Nut 32 geführt werden.

Zur Führung bzw. Fixierung von Wicklungsdrähten 30 an bzw. in der Nut 32 können an den Seitenwandungen 34 und 36 zusätzlich Vorsprünge 42 ausgebildet sein, welche verhindern, dass der Wicklungsdraht 30 in axialer Richtung aus der Nut 32 herausrutscht. Darüber hinaus können durch solche Vorsprünge auch die einzelnen Wicklungsdrähte 30 beabstandet zueinander führen.

Die elektrische Verbindung von jeweils zwei Wicklungen 28 zu einem Wicklungspaar erfolgt in der beschrieben Weise an der ersten axialen Stirnseite 20 der Statoranordnung, welche dem Pumpengehäuse 2 und dem Kragen 16 des Spaltrohrtopfes 8 zugewandt ist. An der entgegengesetzten zweiten Stirnseite 44 werden die Spulen 28 elektrisch kontaktiert. Dazu ist ein Anschlussstecker 46 vorgesehen, welcher in diesem Beispiel drei Pole aufweist, da hier drei Wicklungspaare vorhanden sind. Jedes Wicklungspaar ist mit einem ersten Anschluss bzw. Leiterende mit einem der Pole des Anschlusssteckers 46 verbunden. Der zweite Anschluss jedes Wicklungspaares ist in einer Kontaktleiste 48 mit einem Sternpunkt verbunden. D. h. hier sind die Wicklungen in Sternschaltung angeordnet. Über den Anschlussstecker 46 sind die Wicklungen elektrisch mit der Elektronik 50 in einem mit dem Statorgehäuse 4 verbundenen Klemmenkasten 52 verbunden.

### Bezugszeichenliste

- 2: Pumpengehäuse
- 4: Statorgehäuse
- 6: Statoranordnung
- 8: Spaltrohrtopf
- 10: Rotor
- 12: Rotorwelle
- 14: Laufrad
- 16: Kragen
- 18: Axiale Abwinklung
- 20: erste axiale Stirnseite
- 22: Dichtung
- 24: Statorbleche
- 26: Wicklungsträger
- 28: Wicklungen
- 30: Wicklungsdrähte
- 32: Nut
- 34: äußere Seitenwandung der Nut
- 36: innere Seitenwandung der Nut
- 38: Schlitze
- 40: Stufen
- 42: Vorsprünge
- 44: zweite axiale Stirnseite
- 46: Anschlussstecker
- 48: Kontaktleiste
- 50: Elektronik
- 52: Klemmenkasten

- X: Längs- bzw. Drehachse

## Patentansprüche

1. Statoranordnung für einen elektrischen Motor mit mehreren Wicklungen (28), welche auf einem Wicklungsträger (26) aus Kunststoff angeordnet sind, wobei an zumindest einer axialen Stirnseite (20) des Wicklungsträgers (26) an diesem zumindest eine sich in Umfangsrichtung erstreckende, zur axialen Stirnseite hin geöffnete Nut (32) ausgebildet ist, in welcher zumindest ein elektrischer Leiter (30) angeordnet ist, welcher zwei der Wicklungen (28) elektrisch verbindet, **dadurch gekennzeichnet, dass** der zumindest eine elektrische Leiter (30) von einem lackierten Wicklungsdraht, aus welchem die Wicklungen (28) gebildet sind, gebildet wird und dass die zumindest eine Nut (32) an einer ersten axialen Stirnseite (20) des Wicklungsträgers (26) gelegen ist und an einer entgegengesetzten zweiten axialen Stirnseite (44) ein elektrischer Anschluss zum elektrischen Anschluss der Statoranordnung (6) gelegen ist.

2. Statoranordnung nach Anspruch 1, **dadurch gekennzeichnet, dass** die zumindest eine Nut (32) eine derartige Tiefe in axialer Richtung (X) aufweist, dass der elektrische Leiter (30) am Außenumfang der Statoranordnung (6) vollständig von einer Seitenwandung (34) der Nut (32) überdeckt wird.

3. Statoranordnung nach Anspruch 1 oder 2, **dadurch gekennzeichnet, dass** mehrere Paare von Wicklungen (28) vorgesehen sind, deren zwei Wicklungen (28) jeweils über einen elektrischen Leiter (30) miteinander verbunden sind, welcher in der zumindest einen Nut (32) angeordnet ist.

4. Statoranordnung nach Anspruch 3, **dadurch gekennzeichnet, dass** die Nut (32) zumindest einen Abschnitt aufweist, in welchem mehrere elektrische Leiter (30) angeordnet sind.

5. Statoranordnung nach Anspruch 4, **dadurch gekennzeichnet, dass** die mehreren elektrischen Leiter (30) axial übereinanderliegend in dem zumindest einen Abschnitt der Nut (32) angeordnet sind.

6. Statoranordnung nach einem der vorangehenden Ansprüche, **dadurch gekennzeichnet, dass** in der Nut (32) Vorsprünge (42) zum Halten oder Führen des zumindest einen elektrischen Leiters (30) ausgebildet sind.

7. Statoranordnung nach einem der vorangehenden Ansprüche, **dadurch gekennzeichnet, dass** die Nut (32) Abschnitte von unterschiedlicher Tiefe in axialer Richtung (X) aufweist.

8. Statoranordnung nach einem der vorangehenden Ansprüche, **dadurch gekennzeichnet, dass** die Nut (32) an ihrer radial innenliegenden Wandung (36) Öffnungen (38), insbesondere Schlitze aufweist, durch welche sich der zumindest eine elektrische Leiter (30) von den Wicklungen (28) in die Nut (32) hinein erstreckt.

9. Statoranordnung nach Anspruch 7 und 8, **dadurch gekennzeichnet, dass** die Stufen (40) zwischen den Abschnitten unterschiedlicher Tiefe an den Winkelpositionen der Öffnungen (38) liegen.

10. Statoranordnung nach einem der vorangehenden Ansprüche, **dadurch gekennzeichnet, dass** die Nut (32) eine radial innenliegende Wandung (36) aufweist, welche in axialer Richtung (X) eine größere Höhe hat als eine radial außenliegende Wandung (34) der Nut (32).

11. Statoranordnung nach einem der vorangehenden Ansprüche, **dadurch gekennzeichnet, dass** die Nut (32) sich über einen begrenzten Umfangsabschnitt von weniger als 360° und vorzugsweise weniger oder gleich 320° erstreckt.

12. Statoranordnung nach einem der vorangehenden Ansprüche, **dadurch gekennzeichnet, dass** der elektrische Anschluss an der zweiten axialen Stirnseite (44) ein elektrischer Anschlussstecker (46) ist.

13. Statoranordnung nach einem der vorangehenden Ansprüche, **dadurch gekennzeichnet, dass** der Wicklungsträger (26) eine Anordnung von Statorblechen (24) umschließt, wobei die Anordnung von Statorblechen (24) bevorzugt in den Wicklungsträger (26) eingegossen ist.

14. Elektrischer Motor **gekennzeichnet durch** eine Statoranordnung (6) nach einem der vorangehenden Ansprüche.

15. Elektrischer Motor nach Anspruch 14, **dadurch gekennzeichnet, dass** die Statoranordnung (6) in einem metallischen Statorgehäuse (4) angeordnet ist.

16. Pumpenaggregat, insbesondere Umwälzpumpenaggregat **gekennzeichnet durch** einen elektrischen Motor nach Anspruch 14 oder 15, wobei der elektrische Motor vorzugsweise als nasslaufender elektrischer Motor ausgebildet ist.

17. Pumpenaggregat nach Anspruch 16, **dadurch gekennzeichnet, dass** der elektrische Motor als nasslaufender Motor ausgebildet ist und der Wicklungsträger (26) im Bereich der Nut (32) von einem Kragen (15, 18) eines metallischen Spaltrohres (8) umgeben ist.

## Claims

1. A stator arrangement for an electrical motor with several windings (28) which are arranged on a winding carrier (26) of plastic, wherein at least one groove (32) which extends in the peripheral direction, is open to the axial face side and in which at least one electrical conductor (30) which electrically connects two of the windings (28) is arranged, is formed on the winding carrier (26) on at least one axial face side (20) of this winding carrier (26), **characterised in that** the at least one electrical conductor (30) is formed by a lacquered winding wire, from which the windings (28) are formed and that the at least one groove (32) is situated at a first axial face side (20) of the winding carrier (26), and an electrical connection for the electrical connection of the stator arrangement (6) is situated at an opposite, second axial face side (44).

2. A stator arrangement according to claim 1, **characterised in that** the at least one groove (32) has such a depth in the axial direction (X) that the electrical conductor (30) on the outer periphery of the stator arrangement (6) is completely covered by a side wall (34) of the groove (32).

3. A stator arrangement according to claim 1 or 2, **characterised in that** several pairs of windings (28) are provided, whose two windings (28) are connected to one another in each case via an electrical conductor (30) which is arranged in the at least one groove (32).

4. A stator arrangement according to claim 3, **characterised in that** the groove (32) comprises at least one section, in which several electrical conductors (30) are arranged.

5. A stator arrangement according to claim 4, **characterised in that** the several electrical conductors (30) are arranged lying axially above one another in the at least one section of the groove (32).

6. A stator arrangement according to one of the preceding claims, **characterised in that** projections (42) for holding or guiding the at least one electrical conductor (30) are formed in the groove (32).

7. A stator arrangement according to one of the preceding claims, **characterised in that** the groove (32) comprises sections of a different depth in the axial direction (X).

8. A stator arrangement according to one of the preceding claims, **characterised in that** the groove (32) at its radially inwardly lying wall (36) comprises openings (38), in particular slots, through which the at least one electrical conductor (30) extends from the windings (28) into the groove (32).

9. A stator arrangement according to claim 7 and 8, **characterised in that** the steps (40) between the sections of a different depth lie at the angular positions of the openings (38).

10. A stator arrangement according to one of the preceding claims, **characterised in that** the groove (32) has a radially inwardly lying wall (36) which in the axial direction (X) has a greater height than a radially outwardly lying wall (34) of the groove (32).

11. A stator arrangement according to one of the preceding claims, **characterised in that** the groove (32) extends over a limited peripheral section of less than 360° and preferably less than or equal to 320°.

12. A stator arrangement according to one of the preceding claims, **characterised in that** the electrical connection at the second axial face side (44) is an electrical connection plug (46).

13. A stator arrangement according to one of the preceding claims, **characterised in that** the winding carrier (26) encloses an arrangement of stator laminations (24), wherein the arrangement of stator laminations (24) is preferably moulded into the winding carrier (26).

14. An electrical motor **characterised by** a stator arrangement (6) according to one of the preceding claims.

15. An electrical motor according to claim 14, **characterised in that** the stator arrangement (6) is arranged in a metallic stator housing (4).

16. A pump assembly, in particular circulation pump assembly, **characterised by** an electrical motor according to claim 14 or 15, wherein the electrical motor is preferably designed as a wet-running electrical motor.

17. A pump assembly according to claim 16, **characterised in that** the electrical motor is designed as a wet-running motor, and the winding carrier (26) in the region of the groove (32) is surrounded by a collar (15, 18) of a metallic can (8).

## Revendications

1. Agencement de stator pour un moteur électrique comportant plusieurs enroulements (28) qui sont disposés sur un support d'enroulements (26) en matière synthétique, dans lequel,
sur au moins une face avant axiale (20) du support d'enroulements (26) est réalisée sur celui-ci au moins une rainure (32), ouverte vers la face avant axiale et s'étendant dans la direction périphérique, dans laquelle est disposé au moins un conducteur électrique (30) qui relie électriquement deux des enroulements (28), **caractérisé en ce que** leconducteur électrique (30), au moins au nombre de un, est formé d'un fil d'enroulement laqué à partir duquel sont formés les enroulements (28), et **en ce que** la rainure (32), au moins au nombre de une, est logée sur une première face avant axiale (20) du support d'enroulements (26) et **en ce que**, sur une seconde face avant axiale (44) opposée, est situé un raccordement électrique destiné au raccordement électrique de l'agencement de stator (6).

2. Agencement de stator selon la revendication 1, **caractérisé en ce que** la rainure (32), au moins au nombre de une, a une profondeur en direction axiale (X) telle que le conducteur électrique (30) est intégralement recouvert sur la périphérie extérieure de l'agencement de stator (6) par une paroi latérale (34) de la rainure (32).

3. Agencement de stator selon la revendication 1 ou 2, **caractérisé en ce que** sont prévues plusieurs paires d'enroulements (28), dont deux enroulements (28) sont respectivement reliés entre eux par l'intermédiaire d'un conducteur électrique (30) qui est disposé dans la rainure (32), au moins au nombre de une.

4. Agencement de stator selon la revendication 3, **caractérisé en ce que** la rainure (32) comporte au moins une portion dans laquelle sont disposés plusieurs conducteurs électriques (30).

5. Agencement de stator selon la revendication 4, **caractérisé en ce que** plusieurs conducteurs électriques (30) sont disposés axialement en superposition dans la portion de la rainure (32), au moins au nombre de une.

6. Agencement de stator selon l'une des revendications précédentes, **caractérisé en ce que** sont formées dans la rainure (32) des saillies (42) destinées à maintenir ou guider le conducteur électrique (30), au moins au nombre de un.

7. Agencement de stator selon l'une des revendications précédentes, **caractérisé en ce que** la rainure (32) comporte des portions de profondeur différente en direction axiale (X).

8. Agencement de stator selon l'une des revendications précédentes, **caractérisé en ce que** la rainure (32) présente, sur sa paroi (36) située radialement à l'intérieur, des ouvertures (38), en particulier des fentes à travers lesquelles le conducteur électrique (30), au moins au nombre de un, s'étend depuis les enroulements (28) dans la rainure (32).

9. Agencement de stator selon la revendication 7 et 8, **caractérisé en ce que** les gradins (40) entre les portions de profondeur différente se situent aux positions angulaires des ouvertures (38).

10. Agencement de stator selon l'une des revendications précédentes, **caractérisé en ce que** la rainure (32) présente une paroi (36) située radialement à l'intérieur, dont la hauteur en direction axiale (X) est supérieure à la hauteur d'une paroi (34) de la rainure (32) située radialement à l'extérieur.

11. Agencement de stator selon l'une des revendications précédentes, **caractérisé en ce que** la rainure (32) s'étend sur une portion périphérique limitée, inférieure à 360°, et de préférence inférieure ou égale à 320°.

12. Agencement de stator selon l'une des revendications précédentes, **caractérisé en ce que** le raccordement électrique au niveau de la seconde face avant axiale (44) est une fiche de raccordement électrique (46).

13. Agencement de stator selon l'une des revendications précédentes, **caractérisé en ce que** le support d'enroulements (26) entoure un agencement de tôles de stator (24), l'agencement de tôles de stator (24) étant coulé, de préférence dans le support d'enroulements (26).

14. Moteur électrique **caractérisé par** un agencement de stator (6) selon l'une des revendications précédentes.

15. Moteur électrique selon la revendication 14, **caractérisé en ce que** l'agencement de stator (6) est disposé dans un carter de stator (4) métallique.

16. Groupe motopompe, en particulier groupe motopompe de circulation, **caractérisé par** un moteur électrique selon la revendication 14 ou 15, le moteur électrique étant réalisé de préférence sous la forme d'un moteur électrique du type par voie humide.

17. Groupe motopompe selon la revendication 16, **caractérisé en ce que** le moteur électrique est réalisé sous la forme d'un moteur du type par voie humide et **en ce que** le support d'enroulements (26) est entouré, dans la région de la rainure (32), d'une collerette (15, 18) d'une gaine (8) métallique.
